# EUROPEAN PATENT APPLICATION

(11) **EP 4 813 696 A1**
(43) Date of publication of application: **30.09.2026**
(21) Application number: 26163700.3
(22) Date of filing: 10.03.2026
(51) Int. Cl.: B60K 1/04, B60L 50/64, H01M 50/242, H01M 50/244, H01M 50/262

(54) **VEHICLE LOWER STRUCTURE**

(30) Priority: 26.03.2025 JP 2025052330
(71) Applicant: Toyota Jidosha Kabushiki Kaisha, Toyota-shi, Aichi-ken 471-8571 (JP)
(72) Inventor: KAMINAGA, Takuki, Toyota-shi, Aichi-ken, 471-8571 (JP); TAMAMURA, Atsuhiro, Nagoya, Aichi, 456-0023 (JP)
(74) Representative: Winter, Brandl - Partnerschaft mbB

(57) **Abstract**

A vehicle lower structure, includes: a battery module disposed at a lower part of a vehicle; a battery case having an upper cover part covering an upper face of the battery module, and housing the battery module; a cover board disposed between the battery module and the upper cover part; and an adhesive layer adhering together an upper face of the cover board and a lower face of the upper cover part, wherein a passage that passes through between the upper cover part and the cover board is formed adjacent to the adhesive layer between the upper face of the cover board and the lower face of the upper cover part.

## Description

### BACKGROUND

### Technical Field

The present disclosure relates to a vehicle lower structure.

### Related Art

A battery mounting structure is known in which a battery case containing a battery module (battery stack) is mounted below a floor panel (floor pan) (for example, see Japanese Patent Application Laid-open (JP-A) No. 2018-202946). In this battery mounting structure, an upper cover part of the battery case, which covers an upper surface of the battery module, serves as a floor panel.

Incidentally, in order to protect the battery module, for example, it is conceivable that a cover board is arranged between the battery module and the upper cover part, and the upper surface of the cover board and the lower surface of the upper cover part are adhered to each other via an adhesive layer.

However, when the upper surface of the cover board and the lower surface of the upper cover part are adhered via the adhesive layer, it becomes difficult to remove the upper cover part from the cover board. For this reason, maintenance of the battery module may be troublesome, for example.

As an example, an object of the present disclosure is to facilitate removal of the upper cover part, of which the lower surface is adhered to the upper surface of the cover board, from the cover board.

### SUMMARY

A vehicle lower structure according to a first aspect includes: a battery module disposed at a lower part of a vehicle; a battery case having an upper cover part covering an upper face of the battery module, and housing the battery module; a cover board disposed between the battery module and the upper cover part; and an adhesive layer adhering together an upper face of the cover board and a lower face of the upper cover part, in which a passage that passes through between the upper cover part and the cover board is formed adjacent to the adhesive layer between the upper face of the cover board and the lower face of the upper cover part.

According to the vehicle lower structure of the first aspect, a battery module is arranged at a lower part of the vehicle. The battery module is housed in a battery case. The battery case has an upper cover part which covers an upper surface of the battery module. A cover board is disposed between the upper cover part and the battery module. The upper surface of the cover board and the lower surface of the upper cover part are adhered by an adhesive layer.

Here, a passage passing between the upper cover part and the cover board is formed next to the adhesive layer between the upper surface of the cover board and the lower surface of the upper cover part. As a result, in the present aspect, when removing the upper cover part from the cover board, by sliding a cutting tool such as a wire toward the adhesive layer side in a state in which, for example, the cutting tool is passed through the passage between the upper surface of the cover board and the lower surface of the upper cover part, the adhesive layer can be cut by means of the cutting tool. Therefore, the upper cover part can easily be removed from the cover board.

A vehicle lower structure according to a second aspect is the vehicle lower structure according to the first aspect, in which the passage is formed at both sides of the adhesive layer, respectively.

According to the vehicle lower structure of the second aspect, the passage is formed at each side of the adhesive layer. As a result, when removing the upper cover part from the cover board, a wire, as a cutting tool, is bent in a U-shape in plan view and passed through the passages on respective sides of the adhesive layer, for example. In this state, by pulling both end parts of the wire, the adhesive layer can be cut by the bent part of the wire. Therefore, the upper cover part can be more easily removed from the cover board.

A vehicle lower structure according to a third aspect is the vehicle lower structure according to the second aspect in which the cover board has plural ribs that respectively protrude from the upper face of the cover board at both sides of the adhesive layer, and that support the lower face of the upper cover part, and the passage is formed along the ribs.

According to the vehicle lower structure of the third aspect, by supporting the lower surface of the upper cover part with plural ribs that protrude from the upper surface of the cover board, a predetermined gap is formed between the upper surface of the cover board and the lower surface of the upper cover part along the entire length of the ribs. Owing to this gap, the adhesive layer, which adheres together the upper surface of the cover board and the lower surface of the upper cover part, can be made a predetermined layer thickness, and the passage can be secured next to the adhesive layer.

A vehicle lower structure according to a fourth aspect is the vehicle lower structure according to the third aspect, in which the cover board has a guide rib that protrudes from the upper face of the cover board between the ribs and the adhesive layer, and that is disposed spaced apart from the lower face of the upper cover part, and the passage is formed between the ribs and the guide rib.

According to the vehicle lower structure of the fourth aspect, the cover board has a guide rib. The guide rib protrudes from the upper surface of the cover board between the ribs and the adhesive layer, and is arranged at an interval from the lower surface of the upper cover part. The passage is formed between this guide rib and the ribs.

As a result, when the wire, as the cutting tool, is passed through the passage, the wire is guided by the ribs and the guide rib, whereby the wire can easily be passed through the passage. Therefore, the upper cover part can be more easily removed from the cover board.

Further, when bonding the upper surface of the cover board and the lower surface of the upper cover part via the adhesive layer, the guide rib restricts the adhesive layer before curing from flowing into the side of the passage. As a result, the passage can be secured between the ribs and the adhesive layer.

A vehicle lower structure according to a fifth aspect is the vehicle lower structure according to any one of the first to fourth aspects, in which one end side of the passage broadens on progression toward the one end.

According to the vehicle lower structure of the fifth aspect, one end side of the passage becomes wider toward the one end. As a result, when removing the upper cover part from the cover board, it becomes easier to insert, for example, a wire as a cutting tool into one end side of the passage. Therefore, the upper cover part can be more easily removed from the cover board.

### Effects

According to the present disclosure, as an example, an upper cover part, whose lower surface is adhered to the upper surface of a cover board, can be easily removed from the cover board.

### BRIEF DESCRIPTION OF THE DRAWINGS

Exemplary embodiments of the present invention will be described in detail based on the following figures, wherein:
FIG. 1 is a cross-sectional view of a vehicle to which the vehicle lower structure according to an embodiment is applied, as viewed from the vehicle width-direction;
FIG. 2 is a plan view of the battery module shown in FIG. 1;
FIG. 3 is a cross-sectional view along line 3-3 of FIG. 2;
FIG. 4 is a partially enlarged cross-sectional view of FIG. 3;
FIG. 5 is a cross-sectional view along line 6-6 of FIG. 4; and
FIG. 6 is a cross-sectional view along line 7-7 of FIG. 5.

### DETAILED DESCRIPTION

Hereinafter, an embodiment will be described with reference to the drawings. Note that the arrow FR shown as appropriate in the drawings indicates the vehicle front side (the front side in the vehicle front-rear direction), and the arrow UP indicates the vehicle upper side (the upper side in the vehicle vertical direction). Further, the arrow OUT indicates the outer side in the vehicle width direction. Further, in the following explanation, front-rear, up-down, and left-right refer to front and rear in the vehicle front-rear direction, up and down in the vehicle vertical direction, and left and right in the vehicle width direction, respectively, unless otherwise specified.

### (Vehicle)

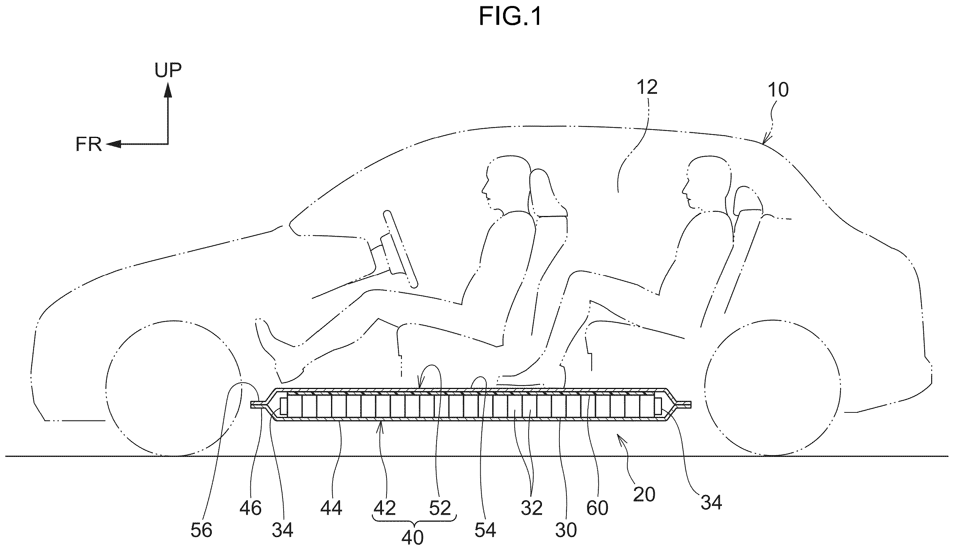

FIG. 1 shows a vehicle 10 to which a vehicle lower structure according to the present embodiment is applied. The vehicle 10 is, for example, an electric automobile using an electric motor (not shown) as a drive source, or a hybrid automobile using an electric motor and an internal combustion engine as a drive source.

### (Battery)

A battery (battery pack) 20 is mounted at a lower part of the vehicle 10. The battery 20 is arranged spanning between a pair of rockers (not illustrated) arranged at respective sides of the vehicle 10 in the vehicle width direction. The battery 20 includes plural battery modules 30, a battery case 40, and plural cover boards 60.

### (Battery Module)

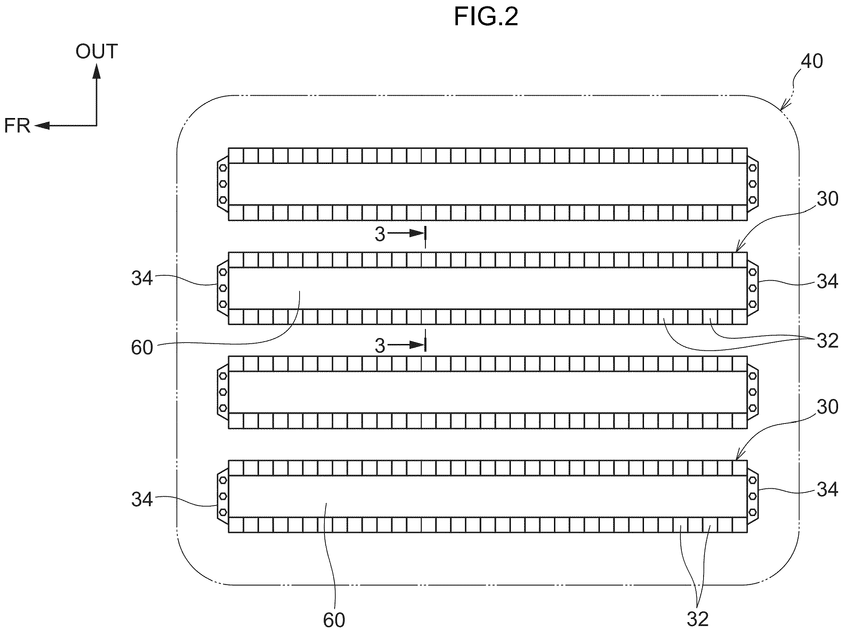

As shown in FIG. 2, the plural battery modules (battery stacks) 30 are arranged with their longitudinal direction in the vehicle front-rear direction and arrayed in the vehicle width direction. Both ends of each battery module 30 in the longitudinal direction are affixed to a lower cover 42 (see FIG. 1) of the battery case 40, which will be described later, via an end plate 34.

Each battery module 30 has plural battery cells 32 arrayed in the longitudinal direction of the battery module 30. The plural battery cells 32 are storage batteries (secondary batteries) which store electric power to be supplied to the above-described electric motor and the like.

Each battery cell 32 is formed in a flat rectangular parallelepiped shape. Further, each battery cell 32 is arranged with its longitudinal direction in the vehicle width direction and its thickness direction in the vehicle front-rear direction. These battery cells 32 are electrically connected in series in a state of being stacked in the longitudinal direction of the battery module 30.

Note that a heat insulating material (not illustrated) is provided between adjacent battery cells 32. Further, a cover board 60, which will be described later, is adhered to the upper surface 30U of the battery module 30.

### (Battery Case)

As shown in FIG. 1, the plural battery modules 30 are housed in the battery case 40. The battery case 40 is formed overall in a flat box shape and is arranged at a lower side of a battery frame (not illustrated). The battery case 40 has a lower cover 42 and an upper cover 52 which are divided in the vehicle vertical direction.

The lower cover 42 is formed of a metal plate such as a steel plate. Further, the lower cover 42 is formed in a box shape with its upper side open, and configures a lower part of the battery case 40. The lower wall part (bottom wall part) of the lower cover 42 serves as a lower cover part 44 which covers the lower surfaces of the plural battery modules 30 from the lower side.

The lower cover part 44 is formed in a plate shape, and is arranged with its thickness direction in the vehicle vertical direction. Further, a flange part 46 that protrudes outward is provided at an end part of the lower cover 42 on the side of the opening. The upper cover 52 is arranged at an upper side of the lower cover 42.

The upper cover 52 is formed of a metal plate such as a steel plate. Further, the upper cover 52 is formed in a box shape with a lower side opened, and constitutes an upper part of the battery case 40. The upper wall part (top wall part) of the upper cover 52 serves as an upper cover part 54 that covers the upper surfaces 30U of the plural battery modules 30 from the upper side. The upper cover part 54 is formed in a plate shape, and is arranged with its thickness direction in the vehicle vertical direction.

A flange part 56 that protrudes outward is provided at an end part of the upper cover 52 on the side of the opening. The flange part 56 of the upper cover 52 and the flange part 46 of the lower cover 42 are connected by bolts and nuts or the like, which are not shown, in a state of being stacked in the vehicle vertical direction.

The upper cover part 54 forms the floor of the vehicle cabin 12. In other words, the upper cover part 54 doubles as a floor panel that forms the floor of the vehicle cabin 12. At an upper surface of the upper cover part 54, for example, a seat cross (not illustrated) extending in the vehicle width direction and a cross member (not illustrated) configuring the battery frame are arranged.

Note that a part of the floor of the vehicle cabin 12 may be formed by a part of the upper cover part 54. In other words, the floor of the vehicle cabin 12 may be formed by at least a part of the upper cover part 54. Further, the floor of the vehicle cabin 12 may be formed, for example, by the upper cover part 54 and a floor panel.

### (Cover Board)

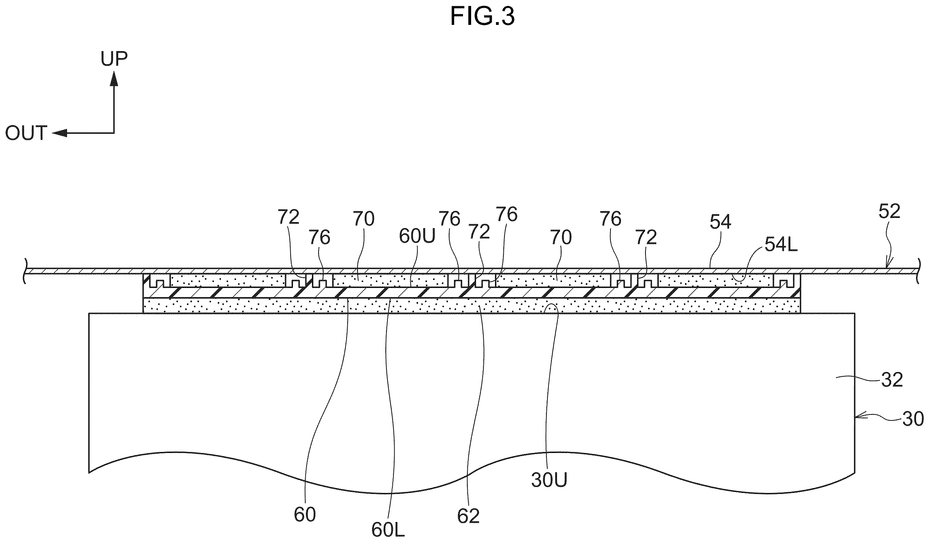

As shown in FIG. 2, plural cover boards 60 are housed in the battery case 40. The cover board 60 is a protective member which protects the upper surface 30U of the battery module 30. Further, by interposing the cover board 60 between the upper cover part 54 (see FIG. 3) and the battery module 30, it also functions as a load distribution member (surface pressure distribution member) which distributes and transmits vertical load from the upper cover part 54 to the upper surface 30U of the battery module 30.

The plural cover boards 60 are made, for example, of resin (resin board), and are arranged with their thickness direction in the vehicle vertical direction. Further, the plural cover boards 60 are formed in a rectangular shape having their longitudinal direction in the vehicle front-rear direction. These cover boards 60 are arranged at intervals in the vehicle width direction so as to be positioned on the upper surfaces 30U of the plural battery modules 30. Further, each cover board 60 extends from one end side in the longitudinal direction of the battery module 30 to the other end side.

As shown in FIG. 3, the lower surface 60L of the cover board 60 is adhered to an intermediate part in the vehicle width direction of the upper surface 30U of the battery module 30. Specifically, the lower surface 60L of the cover board 60 and the upper surface 30U of the battery module 30 are adhered to each other via an adhesive layer 62. The adhesive layer 62 is formed, for example, of a cured urethane-based adhesive. Note that the material of the adhesive layer 62 can be changed as appropriate.

The upper surface 60U of the cover board 60 is adhered to the lower surface 54L of the upper cover part 54. Specifically, the upper surface 60U of the cover board 60 and the lower surface 54L of the upper cover part 54 are adhered to each other via plural adhesive layers 70. The adhesive layer 70 is formed, for example, of a cured silicon-based adhesive. Note that the material of the adhesive layer 70 can be changed as appropriate.

### (Rib)

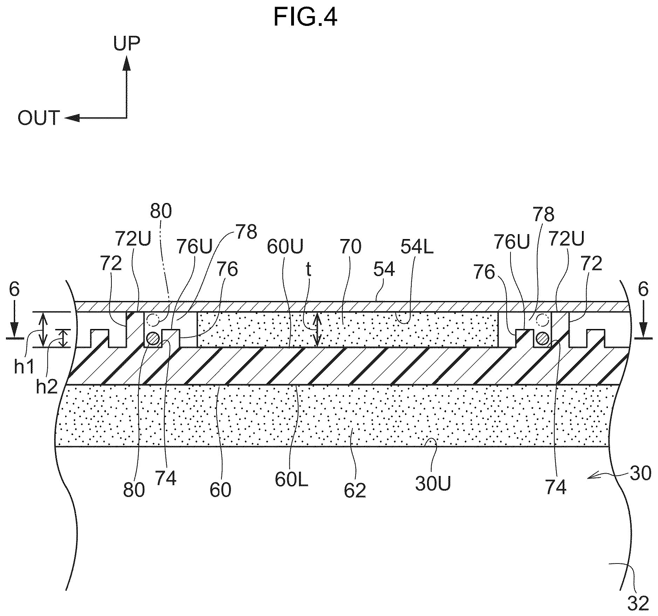

Plural (five in the present embodiment) ribs 72 which support the lower surface 54L of the upper cover part 54 are provided on the upper surface 60U of the cover board 60. When bonding the upper surface 60U of the cover board 60 and the lower surface 54L of the upper cover part 54, the plural ribs 72 function as spacers securing a predetermined gap t (see FIG. 4) between the upper surface 60U of the cover board 60 and the lower surface 54L of the upper cover part 54.

Note that the rib 72 is an example of a protrusion. Further, in FIG. 2, illustration of the rib 72 and the guide rib 76, which will be described later, is omitted.

As an example, the plural ribs 72 are integrally formed with the cover board 60 using resin. Further, the plural ribs 72 extend in the longitudinal direction of the cover board 60 (the vehicle front-rear direction), and extend from one end side to the other end side in the longitudinal direction of the cover board 60. Further, the plural ribs 72 are arranged at intervals in the width direction (vehicle width direction) of the cover board 60. Two of these ribs 72 are provided along respective ends of the cover board 60 in the width direction.

As shown in FIG. 4, the plural ribs 72 protrude upward from the upper surface 60U of the cover board 60. The cross-sectional shape of each rib 72 is rectangular. Further, the upper surface 72U of each rib 72 is a substantially horizontal flat surface, and is in surface contact with the lower surface 54L of the upper cover part 54. By supporting the lower surface 54L of the upper cover part 54 with the upper surface 72U of these ribs 72, a predetermined gap t is formed between the upper surface 60U of the cover board 60 and the lower surface 54L of the upper cover part 54.

Here, the height (protrusion amount) h1 of each rib 72 protruding from the upper surface 60U of the cover board 60 is set in accordance with the design value of the layer thickness t of the adhesive layer 70. An adhesive layer 70 is provided between adjacent ribs 72. As a result, an adhesive layer 70 having a predetermined layer thickness t corresponding to the height h1 of the ribs 72 is formed between the adjacent ribs 72.

### (Passage)

Next to the adhesive layer 70 and between the upper surface 60U of the cover board 60 and the lower surface 54L of the upper cover part 54, a passage 74 is formed, through which is passed a wire 80 such as a steel wire for cutting the adhesive layer 70 at a time of maintenance of the battery module 30, for example. Note that the wire 80 is an example of a cutting tool.

The passage 74 is formed between the adhesive layer 70 and the rib 72. Further, the passage 74 is formed so that the wire 80 can reach the adhesive layer 70. Specifically, a guide rib 76 is provided between the rib 72 and the adhesive layer 70 on the upper surface 60U of the cover board 60.

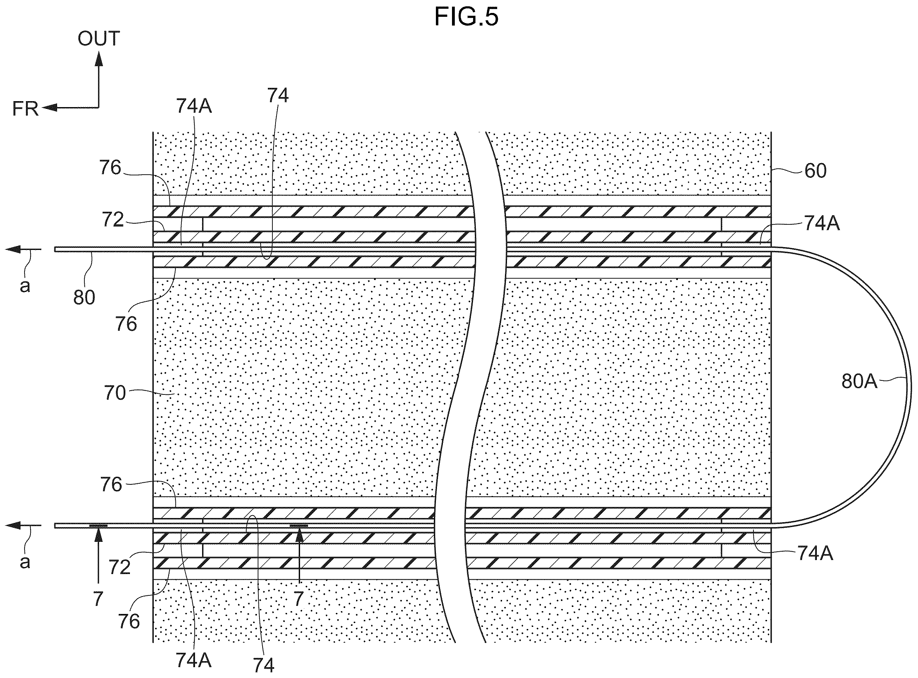

As shown in FIGS. 4 and 5, the guide ribs 76 extend in the longitudinal direction of the cover board 60 (the vehicle front-rear direction) along the ribs 72, and the cover board 60 extends from one end side in the longitudinal direction to the other end side. Further, the guide rib 76 is provided at both sides of the adhesive layer 70 in the width direction (vehicle width direction).

Each guide rib 76 protrudes upward from the upper surface 60U of the cover board 60. Further, the cross-sectional shape of each guide rib 76 is rectangular. Further, the upper surface 76U of each guide rib 76 is a substantially horizontal flat surface. The passage 74 is formed between the guide rib 76 and the rib 72.

The passage 74 is formed from one end side to the other end side in the longitudinal direction of the cover board 60. In other words, the passage 74 passes between the upper surface 60U of the cover board 60 and the lower surface 54L of the upper cover part 54 in the longitudinal direction of the cover board 60 (the vehicle front-rear direction).

Here, as shown in FIG. 4, the height (protrusion amount) h2 of the guide rib 76, which protrudes from the upper surface 60U of the cover board 60, is smaller than the height h1 of the rib 72. As a result, the upper surface 76U of the guide rib 76 is arranged so as to be spaced apart from the lower surface 54L of the upper cover part 54. In other words, a gap 78 communicated with the passage 74 is formed between the upper surface 76U of the guide rib 76 and the lower surface 54L of the upper cover part 54. Via this gap 78, the wire 80 is movable from the passage 74 to the adhesive layer 70.

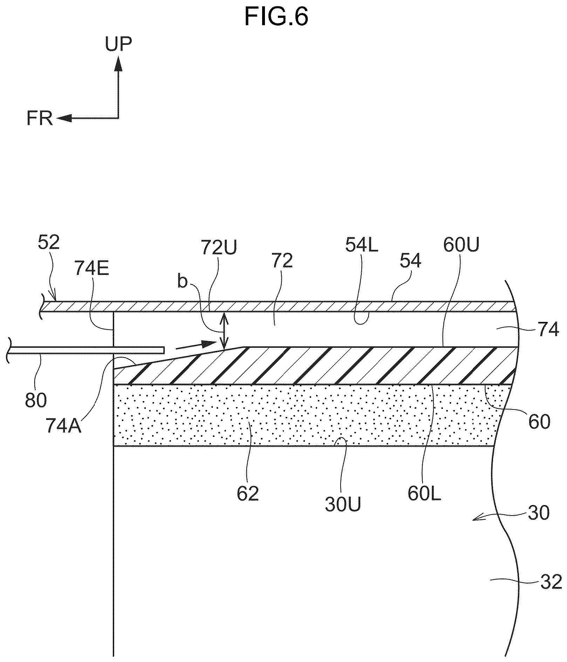

As shown in FIG. 6, a side at one end 74E of the passage 74 in the longitudinal direction (the vehicle front side) broadens toward the one end 74E of the passage 74. Specifically, at the side of the one end 74E of the passage 74, the upper surface 60U of the cover board 60, which configures the lower surface of the passage 74, is configured as an inclined surface 74A which inclines downward on progression toward the one end 74E of the passage 74. Owing to the inclined surface 74A, the vertical width (height) b of the passage 74 increases on progression toward the one end 74E of the passage 74. As a result, the wire 80, as a cutting tool, can easily be inserted into the one end 74E of the passage 74.

As shown in FIG. 5, the inclined surface 74A is formed not only at one end side in the longitudinal direction of the passage 74 but also at the other end side in the longitudinal direction of the passage 74 (the vehicle rear side). Note that the inclined surface 74A can be formed at least at one of the respective end sides of the passage 74 in the longitudinal direction. Further, the inclined surface 74A may be omitted from the cover board 60.

Further, in the present embodiment, at the side of the one end 74E of the passage 74, the vertical width b of the passage 74 becomes wider toward the one end 74E. However, at the side of the one end 74E of the passage 74, the lateral width of the passage 74 may be increased toward the one end 74E, for example.

Specifically, at the side of the one end 74E of the passage 74, an inclined surface which inclines outward toward the one end 74E of the passage 74 may be formed at least at one of the opposing surfaces of the rib 72 and the guide rib 76 that face each other. As a result, the wire 80, as a cutting tool, can easily be inserted into the one end 74E of the passage 74.

### (Method of Adhesion of Cover Board and Upper Cover Part)

Next, an example of a method of adhesion of the cover board 60 and the upper cover part 54 of the upper cover 52 will be described.

When the upper surface 60U of the cover board 60 and the lower surface 54L of the upper cover part 54 are adhered via the adhesive layer 70, the upper cover 52 is placed on the working surface with the lower surface 54L of the upper cover part 54 facing upward, for example. Further, between adjacent ribs 72, an adhesive having a thickness exceeding the height h1 of the rib 72 (see FIG. 4) is applied to the upper surface 60U of the cover board 60.

In this state, the upper surfaces 72U of the plural ribs 72 protruding from the upper surface 60U of the cover board 60 are placed on the lower surface 54L of the upper cover part 54, and the adhesive is spread out between the upper surface 60U of the cover board 60 and the lower surface 54L of the upper cover part 54. As a result, as shown in FIG. 4, an adhesive layer 70 having a predetermined layer thickness t corresponding to the height h1 of the rib 72 is formed between the upper surface 60U of the cover board 60 and the lower surface 54L of the upper cover part 54.

Note that the method of adhering the upper surface 60U of the cover board 60 and the lower surface 54L of the upper cover part 54 is not limited to the above, and can be changed as appropriate.

### (Method of Removing Upper Cover)

Next, an example of a method of removing the upper cover 52 will be described.

As shown in FIG. 1, first, bolts and nuts (not shown) joining flange parts 46, 56 of the lower cover 42 and the upper cover 52 of the battery case 40 are removed. Next, the flange parts 56 on both sides of the upper cover 52 in the vehicle front-rear direction are pulled up, respectively, and both ends of the passages 74 formed between the upper cover part 54 and the cover board 60 are exposed.

Next, as shown in FIG. 5, on one side of the upper cover part 54 in the vehicle front-rear direction (vehicle front side), a wire 80 is inserted into one of the passages 74 on respective sides of the adhesive layer 70 in the width direction, and the wire 80 is passed through the passage 74.

Next, on the other side of the upper cover part 54 in the vehicle front-rear direction (vehicle rear side), the wire 80 protruding from the one passage 74 is bent in a U-shape in plan view and inserted into the other passage 74, and the wire 80 is passed through this passage 74. As a result, at one side of the upper cover part 54 in the vehicle front-rear direction, both end parts of the wire 80 protrude from the passages 74 on respective sides of the adhesive layer 70 in the width direction.

Next, on the other side of the upper cover part 54 in the vehicle front-rear direction, the bent part 80A of the bent wire 80 is raised, and the bent part 80A is disposed at the height of the gap 78 between the guide ribs 76 at respective sides of the adhesive layer 70 in the width direction and the upper cover part 54. As a result, as shown by the two-dot chain line in FIG. 4, the wire 80 is moved upward in the passage 74.

In this state, as shown in FIG. 5, on one side of the upper cover part 54 in the vehicle front-rear direction, as shown by arrows a, both end parts of the wire 80, which protrude from the passages 74 on respective sides of the adhesive layer 70 in the width direction, are pulled. As a result, the bent part 80A of the wire 80 slides along the gap 78 between the guide ribs 76 on respective sides of the adhesive layer 70 and the upper cover part 54, and the adhesive layer 70 is cut.

By repeating the above procedure, the plural adhesive layers 70 that adhere the upper surfaces 60U of the plural of cover boards 60 to the lower surface 54L of the upper cover part 54 are respectively cut. As a result, the upper cover 52 is removed from the plural cover boards 60.

Note that the method of cutting the adhesive layer 70 can be changed as appropriate. For example, in a state in which the wire 80 is passed through the one passage 74 in the width direction of the adhesive layer 70, the adhesive layer 70 may be cut by the wire 80 by sliding the wire 80 toward the side of the adhesive layer 70.

### (Mechanism)

Next, the mechanism of the present embodiment will be described.

As shown in FIG. 1, according to the vehicle lower structure of the present embodiment, the plural battery modules 30 are arranged at the lower part of the vehicle 10. These battery modules 30 are housed in a battery case 40.

The battery case 40 has an upper cover part 54 which covers an upper surface 30U of the battery module 30. A cover board 60 is arranged between the upper cover part 54 and the battery module 30. The upper surface 60U of the cover board 60 and the lower surface 54L of the upper cover part 54 are adhered together by an adhesive layer 70.

Here, as shown in FIG. 4, a passage 74 passing through between the upper cover part 54 and the cover board 60 is formed next to the adhesive layer 70 between the upper surface 60U of the cover board 60 and the lower surface 54L of the upper cover part 54.

As a result, in the present embodiment, when removing the upper cover part 54 from the cover board 60, by sliding a wire 80 toward the side of the adhesive layer 70 in a state in which, for example, the wire 80, as a cutting tool, is passed through the passage 74 between the upper surface 60U of the cover board 60 and the lower surface 54L of the upper cover part 54, the adhesive layer 70 can be cut by the cutting tool. Therefore, the upper cover part 54 can easily be removed from the cover board 60.

Further, as shown in FIG. 5, the passage 74 is respectively formed at both sides of the adhesive layer 70. As a result, when removing the upper cover part 54 from the cover board 60, the wire 80 as a cutting tool is bent in a U-shape in plan view, for example, and passed through the passages 74 on both sides of the adhesive layer 70 in the width direction. In this state, as shown by the arrows a, by pulling on both end parts of the wire 80, the adhesive layer 70 can be cut by the bent part 80A of the wire 80. Therefore, the upper cover part 54 can be more easily removed from the cover board 60.

Furthermore, as shown in FIG. 4, by supporting the lower surface 54L of the upper cover part 54 with plural ribs 72 that protrude from the upper surface 60U of the cover board 60, a predetermined gap t is formed between the upper surface 60U of the cover board 60 and the lower surface 54L of the upper cover part 54 along the entire length of the rib 72. As a result of this gap t, the adhesive layer 70 that bonds together the upper surface 60U of the cover board 60 and the lower surface 54L of the upper cover part 54 can be set to a predetermined layer thickness t, and the passages 74 can be secured next to the adhesive layer 70.

Further, the cover board 60 has guide ribs 76. The guide ribs 76 protrude from the upper surface 60U of the cover board 60 between the rib 72 and the adhesive layer 70, and are arranged spaced apart from the lower surface 54L of the upper cover part 54. The passage 74 is formed between the guide rib 76 and the rib 72.

As a result, when a wire, as a cutting tool, is passed through the passage 74, the wire 80 is guided by the rib 72 and the guide rib 76, whereby the wire 80 can be easily passed through the passage 74. Therefore, the upper cover part 54 can be more easily removed from the cover board 60.

Furthermore, when bonding the upper surface 60U of the cover board 60 and the lower surface 54L of the upper cover part 54 via the adhesive layer 70, the guide rib 76 restricts the adhesive layer 70 before curing from flowing into the side of the passage 74. As a result, the passage 74 can be secured between the rib 72 and the adhesive layer 70.

Further, as shown in FIG. 6, at the side of one end 74E of the passage 74, the lower surface of the passage 74 is configured as an inclined surface 74A that inclines downward on progression toward the one end 74E of the passage 74. Owing to the inclined surface 74A, the vertical width (height) b of the passage 74 expands on progression toward the one end 74E of the passage 74. As a result, the wire 80, as a cutting tool, can easily be inserted into the one end 74E of the passage 74.

Similarly, at the side of the other end of the passage 74 as shown in FIG. 5, the lower surface of the passage 74 is configured as an inclined surface 74A that inclines downward toward the other end of the passage 74. As a result, the wire 80 as the cutting tool can easily be inserted into the other end of the passage 74. As a result, the upper cover 52 can be more easily removed from the cover board 60.

Furthermore, the cover board 60 is made of resin. As a result, together with reducing the weight of the cover board 60, the ribs 72 and the guide ribs 76 can easily be formed on the upper surface 60U of the cover board 60. Further, by making the cover board 60 resin, adhesion between the cover board 60, and the battery module 30 and the upper cover part 54, can be improved.

Further, by interposing the resin cover board 60 between the battery module 30 and the upper cover part 54, the upper cover 52, which forms the floor of the vehicle cabin 12, and the battery module 30 can be insulated.

Furthermore, by making the cover board 60 resin, when cutting the adhesive layer 70 with a wire 80 such as a steel wire, the battery module 30 and the wire 80 are insulated from each other by the cover board 60. Therefore, the adhesive layer 70 can easily be cut by a wire 80 such as a steel wire.

### (Variant Example)

Next, a variant example of the above-described embodiment will be described.

In the above embodiment, a passage 74 is formed at each side of the adhesive layer 70 in the width direction. However, the passage 74 is not limited to both sides of the adhesive layer 70 in the width direction, and may be formed on one side of the adhesive layer 70 in the width direction. In this case, for example, by sliding the wire 80 toward the adhesive layer 70 side in a state in which the wire 80 as a cutting tool is passed through the passage 74 on one side of the adhesive layer 70 in the width direction, the adhesive layer 70 can be cut by the wire 80.

Further, in the above embodiment, the guide rib 76 is formed on the upper surface 60U of the cover board 60. However, the guide ribs 76 may be omitted from the cover board 60. In this case, the passage 74 can be formed between the adhesive layer 70 and the rib 72 by adjusting the amount of the adhesive so that the adhesive configuring the adhesive layer 70 does not reach the rib 72.

Further, in the above embodiment, the upper surface 72U of the rib 72 directly supports the lower surface 54L of the upper cover part 54. However, between the upper surface 72U of the rib 72 and the lower surface 54L of the upper cover part 54, for example, a spacer, such as a sheet material which adjusts the gap t between the upper surface 60U of the cover board 60 and the lower surface 54L of the upper cover part 54, may be interposed. In other words, in the above embodiment, supporting the lower surface 54L of the upper cover part 54 with the rib 72 (protrusion) means not only that the lower surface 54L of the upper cover part 54 is directly supported by the ribs 72, but is a concept including a configuration in which the lower surface 54L of the upper cover part 54 is indirectly supported via a spacer.

Further, in the above embodiment, the cutting tool is a wire 80 such as a steel wire. However, the cutting tool is not limited to the wire 80, and other tools capable of cutting the adhesive layer 70 may be used.

Further, in the above embodiment, the ribs 72 and the guide ribs 76 of the cover board 60 are disposed along the longitudinal direction of the battery module 30 (the vehicle front-rear direction). However, the ribs 72 and the guide ribs 76 are not limited to the longitudinal direction of the battery module 30, and may be arranged, for example, along the width direction of the battery module 30 (the vehicle width direction). Further, the number and arrangement of the ribs 72 and the guide ribs 76 can be changed as appropriate.

Further, in the above embodiment, the lower surface 60L of the cover board 60 is adhered to the upper surface 30U of the battery module 30. However, the lower surface 60L of the cover board 60 is not required to be adhered to the upper surface 30U of the battery module 30.

Further, in the above embodiment, the cover board 60 is made of resin. However, the cover board 60 is not limited to being made of resin, and may be made of a metal, for example.

Further, in the above embodiment, the upper cover part 54 of the upper cover 52 forms the floor of the vehicle cabin 12. However, the floor of the vehicle cabin 12 is not limited to the upper cover part 54, and may be formed by a floor panel provided on the upper cover part 54.

Further, in the above embodiment, the upper cover 52 is formed in a box shape having an open lower side. However, the upper cover 52 is not limited to a box shape in which the lower side is opened, and may be formed in a flat plate shape, for example.

Further, in the above-described embodiment, the battery module 30 is arranged with its longitudinal direction as the vehicle front-rear direction. However, the battery module 30 may be arranged with its longitudinal direction as the vehicle width direction. In this case, the plural battery cells 32 configuring the battery module 30 are arrayed in the vehicle width direction.

Further, in the above embodiment, plural battery modules 30 are housed in the battery case 40. However, the battery case 40 can house at least one battery module 30.

While one embodiment of the present disclosure has been described above, the present disclosure is not limited to such embodiments, and it is, of course, the case that the one embodiment and various modifications may be appropriately combined and used, and various aspects can be implemented in various forms within a range that does not depart from the gist of the present disclosure.

## Claims

1. A vehicle lower structure, comprising:
a battery module (30) disposed at a lower part of a vehicle (10);
a battery case (40) having an upper cover part (54) covering an upper face (30U) of the battery module (30), and housing the battery module (30);
a cover board (60) disposed between the battery module (30) and the upper cover part (54); and
an adhesive layer (70) adhering together an upper face (60U) of the cover board (60) and a lower face (54L) of the upper cover part (54),
wherein a passage (74) that passes through between the upper cover part (54) and the cover board (60) is formed adjacent to the adhesive layer (70) between the upper face (60U) of the cover board (60) and the lower face (54L) of the upper cover part (54).

2. The vehicle lower structure of claim 1, wherein the passage (74) is formed at both sides of the adhesive layer (70), respectively.

3. The vehicle lower structure of claim 2, wherein:
the cover board (60) has a plurality of ribs (72) that respectively protrude from the upper face (60U) of the cover board (60) at both sides of the adhesive layer (70), and that support the lower face (54L) of the upper cover part (54), and
the passage (74) is formed along the ribs (72).

4. The vehicle lower structure of claim 3, wherein:
the cover board (60) has a guide rib (76) that protrudes from the upper face (60U) of the cover board (60) between the ribs (72) and the adhesive layer (70), and that is disposed spaced apart from the lower face (54L) of the upper cover part (54), and
the passage (74) is formed between the ribs (72) and the guide rib (76).

5. The vehicle lower structure of any one of claims 1 to 4, wherein one end (74E) side of the passage (74) broadens on progression toward the one end (74E).
